Europäisches Patentamt

European Patent Office

Office européen des brevets

(19)

(11) Numéro de publication: **0 186 721**
**A1**

# (12) DEMANDE DE BREVET EUROPEEN

(21) Numéro de dépôt: 84440060.6

(22) Date de dépôt: 29.11.84

(51) Int. Cl.⁴: **C 05 G 3/04, C 09 K 17/00**

(30) Priorité: 31.10.84 FR 8416780

(43) Date de publication de la demande: 09.07.86
Bulletin 86/28

(84) Etats contractants désignés: **AT BE CH DE GB IT LI LU NL SE**

(71) Demandeur: **LEON BECK S.A., 2 bis route d'Oberhausbergen, F-67037 Strasbourg (FR)**

(72) Inventeur: **Pekmez, Paul, 4 route d'Oberhausbergen, FR-67037 Strasbourg (FR)**

(74) Mandataire: **Bossard, Jacques-René, CABINET ARBOUSSE BASTIDE 20 rue de Copenhague, F-67000 Strasbourg (FR)**

(54) **Produits gonflants et rétenteurs d'humidité à base de polyacrylamide micronisée.**

(57) Nouveaux produits à action gonflante, aérante et rétentrice d'humidité sur les sols, caractérisés en ce qu'ils consistent en polyacrylamides homopolymères, copolymères et/ou réticulées, présentées sous forme de particules mi- cronisées.

EP 0 186 721 A1

ACTORUM AG

0186721

- 1 -

PRODUITS GONFLANTS ET RETENTEURS D'HUMIDITE A BASE DE POLYA-
CRYLAMIDE MICRONISEE.

La présente invention concerne de nouveaux moyens
pour l'amélioration et la fertilisation des sols.

Les propriétés hydrophiles des polyacrylamides et
de leurs dérivés (homopolymères et copolymères avec par exemple l'acide polyacrylique, et copolymères réticulés avec divers monomères) sont largement connues, et font l'objet de
nombreuses applications.

Parmi ces applications, on peut mentionner les produits consistant dans une forme granulée de ces polymères, qui,
mélangés aux sols, confèrent à ceux-ci la double propriété
de rétention de l'humidité, qu'elle provienne des pluies ou de
l'arrosage artificiel, et d'une expansion assurant leur aération.

Ces produits granulés sont commercialisés avec succès sous la marque commerciale "GRAIN D'EAU" par la déposante.

Leur application est cependant limitée à la préparation des sols vierges, c'est-à-dire ne portant aucune végétation interdisant de les mélanger avec les "GRAINS D'EAU" ;
cela écarte donc cette application dans le cas par exemple des
terrains gazonnés, tels que pelouses, golfs, jardins déjà plantés, hippodromes, terrains de sport et analogues. Cette limitation est d'autant plus fâcheuse que ce sont souvent ces terrains et les cultures qu'ils portent qui souffrent le plus du
manque de l'irrégularité de l'humidité.

Au surplus, leur application est également limitée à l'amélioration des propriétés physiques des sols, sans modifier leurs propriétés nutritionnelles vis-à-vis des végétaux à l'égard desquels ces polymères peuvent être considérés comme neutres.

Ils impliquent donc la nécessité de fertiliser supplémentairement les sols au moyen des composés chimiques classiquement utilisés comme engrais, et adaptés aux diverses cultures envisagées.

La présente invention vise à combler cette double lacune grâce en premier lieu à une forme physique nouvelle des polyacrylamides précitées, et en second lieu à associer cette forme physique nouvelle avec des constituants additionnels fertilisants, pour créer un nouveau produit convenant aux terrains gazonnés et analogues et contenant ses propres éléments fertilisants.

La forme physique fondamentalement nouvelle des polyacrylamides visée par la présente invention est la forme micronisée, c'est-à-dire réduite en particules impalpables, de dimensions de l'ordre du micron.

Sur le plan pratique, le produit à action de gonflement et de rétention d'humidité des sols selon l'invention pourra être utilisé de deux manières :

- il pourra être épandu à l'état sec au-dessus des sols, dans lesquels il s'incorporera comme le produit granulé, mais sans être affecté par la présence de cultures, telles que du gazon, ni affecter de telles cultures. Dès le premier arrosage ou la première pluie, les particules microscopiques percoleront le sol dans lequel elles gonfleront en exerçant leur action.

- il pourra être commercialisé à l'état de gel, c'est-à-dire ayant préalablement gonflé dans un faible volume d'eau, pour se présenter sous l'aspect d'un "miel" transparent. Son application impliquera alors la dilution de ce "miel" au moyen d'eau pour l'obtention d'un liquide, également transparent, mais dans lequel les micro-particules de polyacrylamide, étant insolubles, demeureront en suspension invisible, sauf éventuellement par effet Tyndall, pour contrôle.

Une telle suspension pourra alors être appliquée sur le terrain par aspersion ou épandage, pour obtenir les mêmes effets que précédemment.

Dans les deux cas, la surface des microparticules étant d'autant plus grande qu'elles seront fines, leur absorption augmentera également en proportion, et, après plusieurs arrosages successifs, les microparticules ayant percolé progressivement exerceront un effet cumulatif sur la profondeur de terrain voulue. Ainsi, en cas de pluie, l'eau ne fera pas de flaques, ce qui permet d'un préconiser l'emploi, non seulement dans des zones cultivées, mais par exemple sur des parkings, des hippodromes, des terrains de sport, des courts de tennis ou analogues.

Par ailleurs, selon l'invention également, on pourra incorporer au gel précédent des composés chimiques connus pour leurs propriétés fertilisantes. Ces composés, étant solubles, passeront en solution dans l'eau constitutive du gel, puis dans l'eau de dilution, de sorte que la pulvérisation du liquide résultant aura pour double effet l'application des microparticules de polyacrylamides et de la solution fertilisante elle-même, qui participera au traitement du sol.

Dans de tels gels dilués, la proportion de polyacrylamide pourra être très faible, par exemple de l'ordre de 2 % en poids, tandis que celle des agents fertilisants pourra aller de 10 à 50 % en poids.

Parmi les composés chimiques utilisables, on peut citer à titre d'exemples le phosphate monopotassique, le nitrate de potasse, le nitrate d'ammonium, le sulfate de magnésium, le sel de fer de l'acide EDDHA et analogues, le choix de ces composés est déterminé pour les cultures à fertiliser ; toutefois, les composés chlorés et les produits oxydants sont à éviter car ils risqueraient de provoquer une dégradation prématurée du polymère.

On va maintenant donner à titre d'exemples, quelques compositions étant entendu que dans chaque cas, la quantité d'eau à leur associer représentera le complément à 100 % pour l'obtention du liquide pulvérisable.

Exemple 1 (% en poids)

| | |
|---|---|
| Polyacrylamide réticulée micronisée | 2 |
| Phosphate monopotassique | 5,6 |
| Nitrate de potassium | 1 |
| Nitrate d'ammonium | 4,4 |
| Urée | 9 |

Exemple 2

| | |
|---|---|
| Polyacrylamide réticulée micronisée | 2 |
| Phosphate monopotassique | 4,7 |
| Nitrate de potassium | 5,3 |
| Nitrate d'ammonium | 10 |

Ces deux compositions conviennent aux plantes ornementales.

Exemple 3

| | |
|---|---|
| Polyacrylamide réticulée micronisée | 2 |
| Phosphate monopotassique | 3,2 |
| Nitrate de potassium | 4 |
| Nitrate d'ammonium | 6,3 |
| Sel de fer de l'acide EDDHA | 0,4 |

Cette composition convient pour jardinières de géraniums.

Exemple 4

| | |
|---|---|
| Polyacrylamide réticulée micronisée | 2 |
| Phosphate monopotassique | 4,4 |
| Nitrate de potassium | 5 |
| Nitrate d'ammonium | 9,2 |
| Sulfate de magnésium | 1 |
| Sel de fer de l'acide EDDHA | 0,4 |

Cette composition convient pour les plantes en pots.

0186721

- 5 -

Bien entendu ces exemples n'ont aucun caractère limitatif, et les compositions seront à adapter aux cultures et aux conditions d'application.

Dans la pratique, ces compositions seront de préférence commercialisées sous forme de gels ou "miels" très concentrés, donc de faible poids et encombrement, qu'il suffira de diluer suffisamment, par exemple à environ 1000 fois leur volume, pour obtenir une bonne répartition et une bonne pénétration dans le terrain.

REVENDICATIONS.

1. Nouveaux produits à action gonflante, aérante et rétentrice d'humidité sur les sols, caractérisés en ce qu'ils consistent en polyacrylamides homopolymères, copolymères et/ou réticulées, présentées sous forme de particules micronisées.

2. Produits selon la revendication 1, caractérisés en ce qu'ils sont appliqués au terrain sous forme de poudre sèche.

3. Produits selon la revendication 1, caractérisés en ce qu'ils sont présentés sous forme d'un gel visqueux à faible teneur en eau, destiné à être dilué au moyen d'eau à l'état de liquide applicable sur le terrain par arrosage ou épandage.

4. Produits selon la revendication 3, caractérisés en ce que le gel contient au surplus des composés chimiques à action fertilisante.

5. Produits selon la revendication 4, caractérisés en ce que les composés à action fertilisante sont choisis entre le phosphate monopotassique, le nitrate de potassium, le nitrate d'ammonium, le sulfate de mangésium, le sel de fer de l'acide EDDHA, et l'urée, à l'exclusion des composés chlorés et oxydants.

6. Produit selon les revendications 1 à 5, caractérisé en ce qu'il contient :

| | |
|---|---|
| Polyacrylamide réticulée micronisée | 2 |
| Phosphate monopotassique | 5,6 |
| Nitrate de potassium | 1 |
| Nitrate d'ammonium | 4,4 |
| Urée | 9 |

7. Produit selon les revendications 1 à 5, caractérisé en ce qu'il contient :

| | |
|---|---|
| Polyacrylamide réticulée micronisée | 2 |

|                                          |      |
|------------------------------------------|------|
| Phosphate monopotassique                 | 4,7  |
| Nitrate de potassium                     | 5,3  |
| Nitrate d'ammonium                       | 10   |

8. Produit selon les revendications 1 à 5, caractérisé en ce qu'il contient :

|                                          |      |
|------------------------------------------|------|
| Polyacrylamide réticulée micronisée      | 2    |
| Phosphate monopotassique                 | 3,2  |
| Nitrate de potassium                     | 4    |
| Nitrate d'ammonium                       | 6,3  |
| Sel de fer de l'acide EDDHA              | 0,4  |

9. Produit selon les revendications 1 à 5, caractérisé en ce qu'il contient :

|                                          |      |
|------------------------------------------|------|
| Polyacrylamide réticulée micronisée      | 2    |
| Phosphate monopotassique                 | 4,4  |
| Nitrate de potassium                     | 5    |
| Nitrate d'ammonium                       | 9,2  |
| Sulfate de magnésium                     | 1    |
| Sel de fer de l'acide EDDHA              | 0,4  |

**Office européen
des brevets**

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 101 253 (ALLIED COLLOIDS LTD.) <br> * Page 12, revendications 1,5,6,7 * | 1 | C 05 G 3/04 <br> C 09 K 17/00 |
| | --- | | |
| A | AU-B- 50 658 (UNION CARBIDE)(1973) <br> * Pages 34-37; revendications 1,7,23 * | 1,2,4 | |
| | --- | | |
| A | EP-A-0 072 214 (UNILEVER) <br> * Page 17, revendication 1; page 7, lignes 1-22 * | 1-4 | |
| | --- | | |
| A | EP-A-0 072 213 (UNILEVER) <br> * Page 1, résumé * | 1-3 | |
| | --- | | **DOMAINES TECHNIQUES RECHERCHES (Int. Cl.4)** |
| A | FR-A-2 543 565 (LOBOFINA) <br> * Page 3, lignes 4-19 * | 1,3 | C 05 G 3/04 <br> C 05 G 3/00 <br> C 09 K 17/00 |
| | ----- | | |

| Le présent rapport de recherche a été établi pour toutes les revendications | | |
|---|---|---|
| Lieu de la recherche <br> LA HAYE | Date d'achèvement de la recherche <br> 13-02-1986 | Examinateur <br> LIBBERECHT-VERBEECK |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82